# EUROPÄISCHE PATENTANMELDUNG

(11) **EP 2 386 748 A2**
(43) Veröffentlichungstag der Anmeldung: **16.11.2011**
(21) Anmeldenummer: 11075084.1
(22) Anmeldetag: 11.05.2011
(51) Int. Cl.: F03B 13/18

(54) **Wellenenergiekonverteranordnung mit hoher Generatordrehzahl**

(30) Priorität: 11.05.2010 DE 102010020219; 04.11.2010 DE 102010050188
(71) Anmelder: Gimsa, Dr., Andreas, 14557 Michendorf (DE)
(72) Erfinder: Gimsa, Dr., Andreas, 14557 Michendorf (DE)
(74) Vertreter: Pfenning, Meinig & Partner GbR

(57) **Zusammenfassung**

Die Erfindung beschreibt eine Wellenenergiekonverteranordnung, die bei hoher Effizienz einen einfachen und robusten Aufbau besitzt, eine hohe Generatordrehzahl erzeugt und die darüber hinaus für ein breites Band von Wellenlängen und Amplituden geeignet ist. Eine weitere Ausführungsform der Erfindung beschreibt eine Wellenenergiekonverteranordnung, die die Wellendrift ausnutzen kann und die besondere Strömungsschwimmkörper besitzt.

## Beschreibung

Die vorliegende Erfindung betrifft eine Wellenenergiekonverteranordnung mit hoher Generatordrehzahl.

Es sind die verschiedensten Anordnungen von Wellenenergiekonverteranordnungen bekannt. Es gibt Systeme mit Lineargeneratoren (Firma Westwave), schaukelnde Anordnungen (Firma Kloss), Kolbensysteme (Firma AW Energy Oy), Gasdrucksysteme und viele andere mehr.

Diesen Systeme haften folgende Schwierigkeiten an: Sie können zwar Wellenenergie in elektrische Energie umwandeln, haben dabei jedoch einen niedrigen Wirkungsgrad.

Die geringe Frequenz und die wechselnden Amplituden der Wasserwellen stellen für Lineargeneratoren eine schwer zu beherrschende Herausforderung dar. Deren Wirkungsgrade sind vor allem bei hohen Frequenzen hoch. Dazu kommt ein komplizierter Aufbau im Vergleich mit handelsüblichen Drehgeneratoren. Eine nutzbringende Optimierung für ein breites Amplitudenband der Wasserwellen ist wegen unterschiedlicher Überlappungsbereiche von Oszillator und Stator schwierig.

Systeme, die die hohe Leistungsdichte der Wasserwelle erst in eine Gasdruckschwingung umsetzen, sind mit hohen Umwandlungsverlusten behaftet.

Die meisten der bekannt gewordenen Systeme besitzen neben ihrem niedrigen Wirkungsgrad einen hohen Preis.

Die vorliegende Erfindung beseitigt die geschilderten Schwierigkeiten, d. h. der vorliegenden Erfindung liegt die Aufgabe zugrunde, eine Wellenenergiekonverteranordnung zu entwickeln, die die genannten Nachteile vermeidet, mit der also ein hoher Wirkungsgrad auch bei geringen Frequenzen erreicht wird.

Diese Aufgabe wird erfindungsgemäß gelöst durch eine Wellenenergiekonverteranordnung mit den Merkmalen des Hauptanspruchs.

Vorteilhafte Weiterbildungen werden in den Unteransprüchen beschrieben.

Die Wellenenergiekonverteranordnung umfasst ein erstes Hauptbauteil und ein zweites Hauptbauteil sowie einen Generator, welcher zum Umwandeln von einer potentiellen Energie in eine elektrische Energie dient. Das erste Hauptbauteil ist ausgebildet zum Liegen unterhalb einer Wasseroberfläche, und zum Streben durch Auftriebskräfte zur Wasseroberfläche. Um es an und in einer definierten Position zu halten, ist es an einem Meeresboden befestigbar. Das zweite Hauptbauteil ist ausgebildet zum Schwimmen auf der Wasseroberfläche und ist mit dem ersten Hauptbauteil über ein aufrollbares Zugseil oder eine linear geführte Zahnstange verbunden, wobei das zweite Hauptbauteil gegenüber dem ersten Hauptbauteil vertikal-linear mit einem Wellengang auf- und abwärts bewegbar ist, wobei das erste Hauptbauteil und das zweite Hauptbauteil zueinander parallel zueinander geführt sind.

Durch die Parallelführung der beiden Bauteile wird erreicht, dass eine Amplitude des Wellengangs ideal ausgenutzt wird, da keine Verkippung beider Hauptbauteile und daraus resultierend eine verminderte Amplitude der Bewegung erfolgt. Durch die Bewegung auf der Wasseroberfläche variiert eine potentielle Energie des zweiten Hauptbauteils, welche in eine elektrische Energie durch die Verbindung zwischen den beiden Hauptbauteilen und den Generator überführt werden kann. Somit kann nur durch den Wellengang eine Energiekonversion stattfinden.

Eine Ausführung kann vorsehen, dass das erste Hauptbauteil mindestens einen Schwimmkörper umfasst, der vorzugsweise in horizontaler Lage zum Meeresboden abspannbar ist. Durch die horizontale Lage bezüglich des Meeresbodens kann die Amplitude des Wellengangs besonders gut ausgenutzt werden. Weiter kann vorgesehen sein, dass das zweite Hauptbauteil eine Generatorboje umfasst, welche die für die Energiekonversion benötigten Bauteile umfasst.

In einer weiteren Ausführung kann vorgesehen sein, dass das erste Hauptbauteil und das zweite Hauptbauteil gelenkig verbunden sind, wobei vorzugsweise mindestens drei Schenkelpaare gelenkig an dem ersten Hauptbauteil befestigt sind und jeweils ein Gelenk zwischen Schenkeln der Schenkelpaare umfassen. Eine gelenkige Verbindung erlaubt eine mechanisch stabile aber dennoch einfach mit dem Wellengang mitzubewegende Verbindung zur Einstellung einer Höhendifferenz zwischen beiden Bauteilen. Drei Schenkelpaare bieten den Vorteil einer klaren linearen Führung.

Eine weitere Ausführung sieht vor, dass das erste Hauptbauteil und das zweite Hauptbauteil mit einer ersten Feder, die eine Gewichtsenergie des zweiten Hauptbauteils aufnehmen kann, gekoppelt ist, wobei das erste Hauptbauteil und das zweite Hauptbauteil über das Zugseil oder die linear geführte Zahnstange miteinander in Wechselwirkung stehen. Weiter kann vorgesehen sein, dass das zweite Hauptbauteil in Kraftflussrichtung folgende wesentlichen Bauteile aufweist: das Zugseil, das sich mit dem Wellengang auf einem Spulenkörper auf- und abwickelt und dessen unteres Ende am ersten Hauptbauteil befestigt ist; den Spulenkörper, der das Zugseil aufnimmt; eine Pendelwelle, die sich mit dem Zugseil hin- und herdreht; eine weitere Feder, deren eines Ende mit der Pendelwelle und deren anderes Ende mit einer Rahmenkonstruktion des zweiten Hauptbauteils verbunden ist, wobei die weitere Feder zu einer Vorspannung des Zugseils dient und das abgewickelte Zugseil wieder zurück zieht und damit einen Aufwickelvorgang antreibt; einen Freilauf, der die Pendelwelle mit einem Getriebe verbindet und dafür sorgt, dass sich angetriebene Räder des Getriebes immer nur in eine Richtung drehen; das Getriebe, welches zwischen der Pendelwelle und einer Generatorwelle zur Drehzahlerhöhung liegt; die Generatorwelle mit einem Schwungrad sowie schließlich einen Generator. Somit weist das zweite Hauptbauteil die für eine Energiekonversion benötigten Bauteile auf, welche durch dessen auf der Wasseroberfläche schwimmende Positionierung besser vor Spritzwasser geschützt sind als im ersten Hauptbauteil. Durch die Bauteile ist eine einfache Konversion der potentiellen Energie, welche über das Zugseil vermittelt wird in elektrische Energie möglich.

Eine weitere Ausführung sieht vor, dass der Freilauf zwischen der Generatorwelle und dem Getriebe oder innerhalb des Getriebes angeordnet ist. Diese Anordnung kann je nach gewähltem Einsatzgebiet vorteilhaft sein.

In einer Ausführung kann vorgesehen sein, dass das Zugseil mittig durch einen Boden des zweiten Hauptbauteils geführt ist. Hierdurch wird die Konstruktion vereinfacht und eine symmetrische Anordnung ermöglicht.

Eine Ausführung sieht vor, dass das erste Hauptbauteil mindestens drei Schwimmkörper umfasst, welche an mindestens einem Ausleger einer Aufnahme befestigt sind und das zweite Hauptbauteil mit dem Wellengang von der Aufnahme abdrückbar ist, wobei das Zugseil abgewickelt wird, um den Generator anzutreiben. Die Schwimmkörper können sich somit bei fehlender Befestigung am Meeresboden oder einer längenvariablen Befestigung mit Ebbe und Flut mitbewegen.

In einer Ausführung weiter vorgesehen sein, dass die mindestens drei Schwimmkörper derart ausgebildet sind, dass sie einen geringen Strömungswiderstand aufweisen. Somit wird die Energie einer Welle nicht bereits durch die Schwimmkörper absorbiert, sondern steht zur Energiekonversion zur Verfügung.

Eine Ausführung kann vorsehen, dass zu einer Vergrößerung einer Massenträgheit eines die Aufnahme, den Ausleger und den Schwimmkörper umfassenden Systems tiefer unterhalb der Wasseroberfläche liegende Bereiche der mindestens drei Schwimmkörper mit inneren und/oder äußeren Gewichten beschwert sind. Somit wird dieses System aufgrund seiner Trägheit von Wellen weniger stark beeinflusst.

In einer Ausführung kann vorgesehen sein, dass die mindestens drei Schwimmkörper derart ausgebildet sind, dass der Wellengang dem zweiten Hauptbauteil derart zugeleitet wird, dass eine kinetische Energie einer Wellendrift in eine potentielle Energie einer erhöhten Wellenamplitude umwandelbar ist. Weiter kann hierzu vorgesehen sein, dass eine Umwandlung der kinetischen Energie in die potentielle Energie durch horizontale, an der Aufnahme befestigte und unterhalb der Wasseroberfläche liegende Leitbleche verstärkbar ist. Somit wird die Energie der Wellen in besonders effizienter Weise ausgenutzt.

Eine Ausführung sieht vor, dass das erste Hauptbauteil einen Abspannungsstab sowie eine Abspannung, vorzugsweise ein Abspannseil, aufweist, wobei die Abspannung mit einem Ende an einem unteren Ende des Abspannungsstabs und mit einem weiteren Ende am Meeresboden befestigt ist. Weiterhin kann die Befestigung am Meeresboden längenvariabel sein, um einen gezeitenunabhängigen Betrieb zu ermöglichen.

Ausführungsbeispiele der Erfindung sind in den Zeichnungen dargestellt und werden nachfolgende anhand der Figuren 1 bis 9 erläutert.

Es zeigen:
- Fig. 1: eine perspektivische Ansicht einer Wellenenergiekonverteranordnung mit Schnittdarstellung der Generatorboje,
- Fig. 2: eine Fig. 1 entsprechende weitere perspektivische Darstellung einer Wellenenergiekonverteranordnung,
- Fig. 3: eine perspektivische Ansicht einer auf einer Welle schwimmenden Wellenenergiekonverteranordnung mit Befestigung am Meeresboden,
- Fig. 4: eine Fig. 3 entsprechende weitere perspektivische Ansicht einer auf einer Welle schwimmenden Wellenenergiekonverteranordnung mit Befestigung am Meeresboden mit zueinander geführtem ersten und zweiten Hauptbauteil,
- Fig. 5a: eine perspektivische Ansicht eines Ausführungsbeispiels einer Wellenenergiekonverteranordnung mit drei Schwimmkörpern,
- Fig. 5b: eine Aufsicht des in Fig. 5a dargestellten Wellenenergiekonverteranordnung,
- Fig. 6: eine seitliche Ansicht eines Schwimmkörpers mit Ausleger der Wellenenergiekonverteranordnung,
- Fig. 7: eine seitliche Ansicht einer weiteren Aus-führungsform eines Schwimmkörpers mit Ausleger,
- Fig. 8: eine seitliche Ansicht einer Abspannung eines Schwimmkörpers zum Meeresboden hin und
- Fig. 9: eine Fig. 6 entsprechende Darstellung mit einer alternativen Verbindung zwischen erstem Hauptbauteil und zweiten Hauptbauteil.

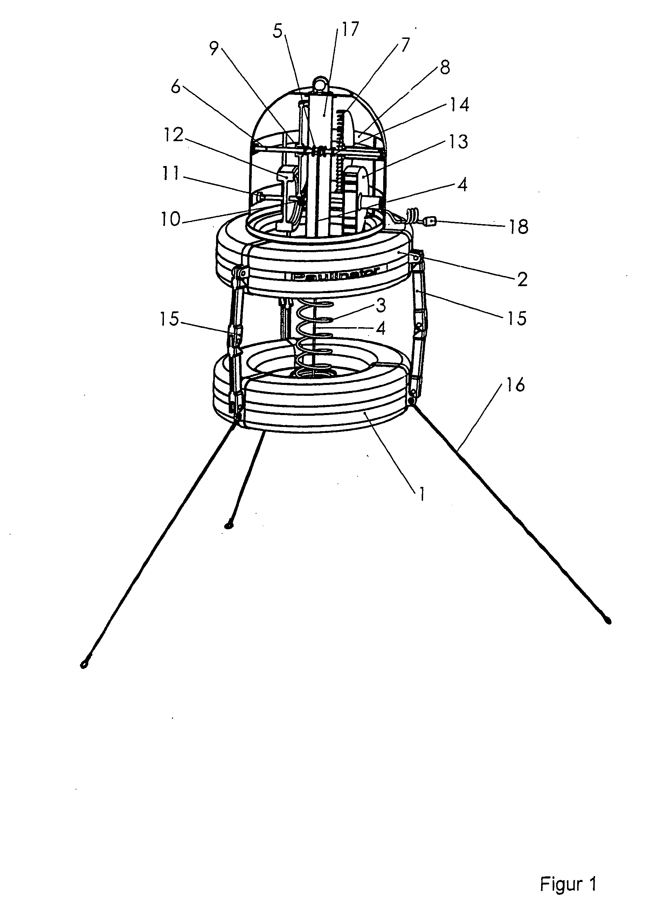

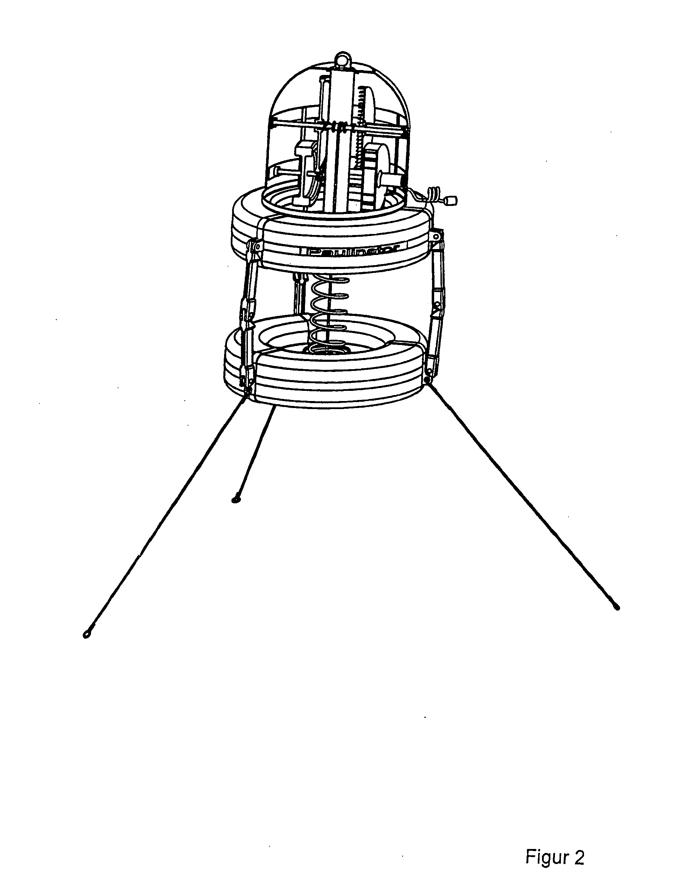

In den Fign. 1 und 2 ist in perspektivischer Ansicht ein Ausführungsbeispiel einer Wellenenergiekonverteranordnung gezeigt. Die Wellenenergiekonverteranordnung umfasst ein erstes Hauptbauteil, im dargestellten Ausführungsbeispiel einem Schwimmkörper 1, und ein zweites Hauptbauteil, im dargestellten Ausführungsbeispiel eine Generatorboje 2. Die Generatorboje 2 ist in einer Schnittdarstellung wiedergegeben, um die in einem Dom der Generatorboje liegenden Bauteile darzustellen. Der Schwimmkörper 1 und die Generatorboje 2 sind parallel zueinander geführt, d. h. eine Unterseite der Generatorboje 2 verläuft stets parallel zu einer Oberseite des Schwimmkörpers 1. Gleiche Bauteile sind in den Zeichnungen mit jeweils gleichen Bezugszeichen versehen.

Der Aufbau der erfindungsgemäßen Wellenenergiekonverteranordnung (Figur 1 und Figur 2) ist dadurch gekennzeichnet, dass eine Wellenenergiekonverteranordnung aus zwei Hauptbauteilen besteht:
Einem Schwimmkörper 1, der unter Wasser liegt, durch seinen Auftrieb zur Meeresoberfläche strebt und in horizontaler Lage zum Meeresgrund abgespannt ist und einer Generatorboje 2, die auf dem Wasser schwimmt, mit dem Schwimmkörper 1 gelenkig und über ein aufrollbares Zugseil 4 verbunden ist und sich ihm gegenüber vertikal-linear mit den Wellen auf- und abwärts bewegt. Das Zugseil 4 ist hierbei mittig durch einen Boden des zweiten Hauptbauteils geführt und kann ein Stahlseil umfassen.

Der Schwimmkörper 1 und die Generatorboje 2 sind mit einer Druckfeder 3, die die Gewichtsenergie der Generatorboje 2 aufnehmen kann, gekoppelt und beide Hauptbauteile stehen über das Zugseil 4 miteinander in Wechselwirkung.

Die Auslegung der Druckfeder 3 bezüglich ihrer Federkonstante und des Schwimmkörpers 1 bezüglich seines Auftriebes sind im dargestellten Ausführungsbeispiel derart, dass die Generatorboje 2 über die Druckfeder 3 bei der Abwärtsbewegung den Schwimmkörper 1 nicht in eine tiefere Lage unter Wasser drücken kann, sondern nur die Druckfeder 3 spannt.

In Kraftflussrichtung enthält die Generatorboje 2 die folgenden wesentlichen Bauteile:
- ein Zugseil 4, das sich mit dem Wellengang auf einem Spulenkörper 5 auf- und abwickelt und dessen unteres Ende am Schwimmkörper 1 befestigt ist;
- einen Spulenkörper 5, der das Zugseil 4 aufnimmt;
- eine Pendelwelle 6, die sich mit dem Zugseil hin und her dreht;
- eine Feder 7, deren eines Ende mit der Pendelwelle 6 und deren anderes Ende mit einer Rahmenkonstruktion 8 der Generatorboje 2 fest verbunden ist, die der Vorspannung des Zugseiles 4 dient und die das abgewickelte Seil 4 wieder zurück zieht und damit den Aufwickelvorgang antreibt;
- einen Freilauf 9, der die Pendelwelle 6 mit dem Getriebe 10 verbindet und dafür sorgt, dass sich die angetriebenen Räder des Getriebes 10 immer nur in eine Richtung drehen;
- ein Getriebe 10, zwischen Pendel- und Generatorwelle 11 zur Drehzahlerhöhung;
- eine Generatorwelle 11 mit Schwungrad 12 und
- einen Generator 13.

Die Anordnung des Freilaufes 9 kann zwischen Pendelwelle 6 und Getriebe 10 erfolgen, jedoch auch in einer alternativen Ausbildung zwischen Generatorwelle 11 und Getriebe 10 oder innerhalb des Getriebes 10 erfolgen.

Die Außenringe der Kugellager beider Wellen 6 und 11, das Federgehäuse und das Generatorgehäuse sind fest mit der Rahmenkonstruktion 8 verbunden, die sich auf der Innenseite des Domes der Generatorboje 2 befindet.

Wellendichtungen 14 dichten die Pendelwelle 6 gegenüber dem Spritzwasser im Bereich des Innenrohres 17 wasserdicht ab.

Anstelle des Zugseiles 4 kann auch eine linear geführte Zahnstange zum Einsatz kommen. Der Spulenkörper 5 wird bei dieser Variante dann als Zahnrad ausgeführt, das die Pendelwelle 6 antreibt. Nachteilig dabei sind die größere Bauhöhe der entsprechend modifizierten Generatorboje 2, die Reibung der Zahnstange gegen das Zahnrad und die benötigte Linearführung der Zahnstange. Allerdings kann die Funktion der Druckfeder 3, die sonst die Gewichtsenergie der Generatorboje 2 aufnimmt, von der Feder 7 übernommen werden, da kein Zugseil 4 mehr vorhanden und einzuziehen ist.

Eine Linearführung, welche im dargestellten Ausführungsbeispiel drei Schenkelpaare 15 umfasst, welche jeweils ein Gelenk zwischen Schenkeln der Schenkelpaare 15 aufweisen, erlaubt eine geführte Variation eines Abstands von Generatorboje 2 und Schwimmkörper 1. Die Schenkelpaare 15 sind hierzu mit einem Ende an dem Schwimmkörper 1 und mit einem anderen Ende an der Generatorboje 2 befestigt. Durch das zwischen beiden Enden liegende Gelenk kann der Abstand zwischen Schwimmkörper 1 und Generatorboje 2 variiert werden. Eine Abspannung 16, im in den Fign. 1 und 2 dargestellten Ausführungsbeispiel drei Abspannseile, ermöglicht ein Befestigen der Wellenenergiekonverteranordnung am Meeresboden oder einem anderen flüssigkeitsbedeckten Boden. Über einen Stromanschluss 18 kann die erzeugte elektrische Energie abgeführt werden, alternativ kann die Energie dazu verwendet werden, elektrische Verbraucher der Generatorboje, wie Glühlampen, LED's oder Sensoren zu betreiben. Der Stromanschluss 18 ist im dargestellten Ausführungsbeispiel an der Generatorboje 2 angebracht und befindet sich oberhalb der Wasseroberfläche, kann jedoch auch unterhalb der Wasseroberfläche angeordnet sein.

Der Generator 13 kann sich in einem nicht dargestellten Ausführungsbeispiel auch im ersten Hauptbauteil, also unterhalb der Wasseroberfläche befinden. In diesem Fall ist auch der Stromanschluss 18 am ersten Hauptbauteil angebracht.

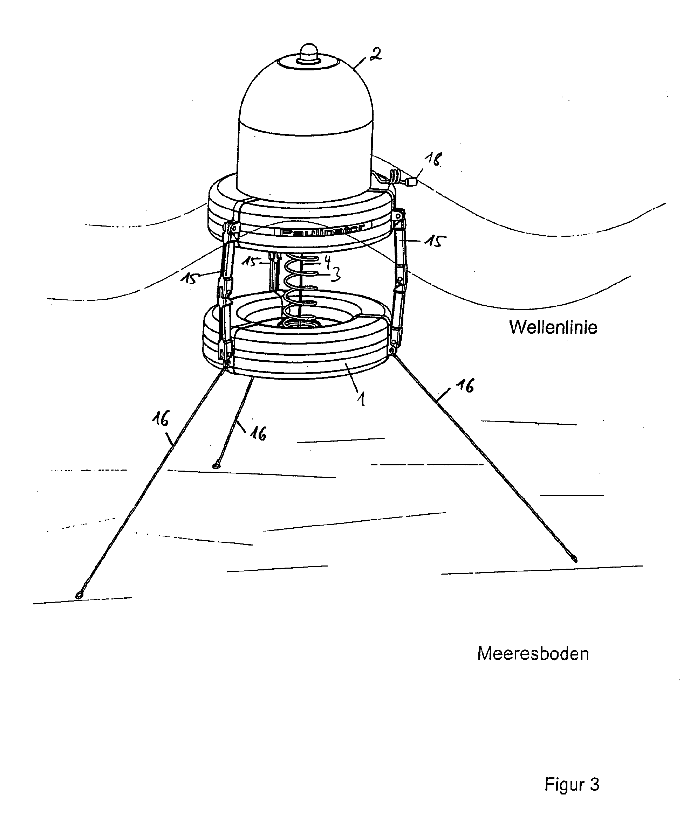

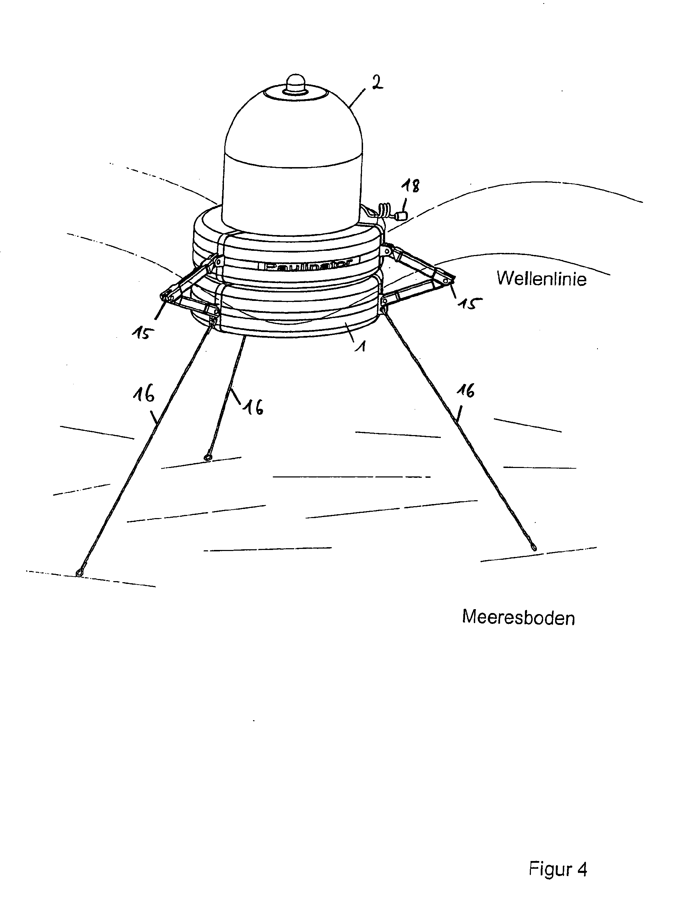

Die Fign. 3 und 4 stellen die Funktionsweise der Wellenenergiekonverteranordnungs dar. Die Wellenenergiekonverteranordnung muss entsprechend den typischen Wellenamplituden ausgelegt werden. Bei ruhiger See schwimmt die Generatorboje 2 auf der Meeresoberfläche und der Schwimmkörper 1 befindet sich so tief unter Wasser, dass jeweils zwei Schenkel der drei Schenkelpaare im selben mittleren Winkel zueinander stehen (zwischen dem von Figur 3 und Figur 4).

Mit der anlaufenden Welle fährt die Generatorboje 2 durch den Auftrieb des unten befestigten Schwimmringes auf den Wellenberg (Figur 3). Das Zugseil 4 zieht tangential am Spulenkörper 5 und wickelt sich ab während der Spulenkörper 5 in Drehung gerät.

Durch die Bewegung des Spulenkörpers 5, der fest mit der Pendelwelle 6 verbunden ist, werden das Getriebe 10, die Generatorwelle 11, das Schwungrad 12 und der Generator 13 angetrieben. Im Generator wird ein Stromfluss erzeugt. Bei dieser Aufwärtsbewegung der Generatorboje 2 wird die Feder 7, die bereits vor der Aufwärtsbewegung der Generatorboje 2 eine Vorspannung hatte, weiter gespannt.

Gleichzeitig mit der Aufwärtsbewegung der Generatorboje 2 wird die Druckfeder 3 entspannt und die in ihr gespeicherte Energie ebenfalls über das Zugseil 4 zum Generator 13 übertragen.

Nachdem der Wellenberg die Generatorboje 2 passiert hat, fährt sie senkrecht hinab in das Wellental (Figur 4). Der Freilauf 9 entkoppelt bei der jetzt entgegengesetzten Drehrichtung der Pendelwelle 6 diese von der weiter fortlaufenden Bewegung des Getriebes 10, der Generatorwelle 11, des Schwungrades 12 und des Generatorläufers in 13. Die Feder 7 wickelt das Zugseil 4 auf den Spulenkörper 5. Durch das Eigengewicht der Generatorboje 2 wird während ihrer Abwärtsbewegung in das Wellental die Druckfeder 3 gespannt. Damit arbeitet diese Wellenenergiekonverteranordnung doppelt wirkend: Sie wandelt sowohl bei ihrer Aufwärts- als auch bei ihrer Abwärtsbewegung die Meeresenergie in elektrische Energie um.

Das Schwungrad 12 sorgt gemeinsam mit den anderen drehenden trägen Massen für eine gleichmäßig hohe Drehzahl der Generatorwelle 11.

Um ein mögliches Zusammenstoßen von Schwimmkörper 1 und Generatorboje 2 abzufedern, können zwischen beiden Bauteilen elastische Pufferelemente zum Einsatz kommen. Die Pufferwirkung tritt jedoch auch durch kurzzeitig tieferes Eintauchen des Schwimmkörpers 1 in Folge des Zusammenstoßes ein.

Um ein mögliches Überstrecken der drei Gelenke der Linearführung 15 zu vermeiden, können in ihnen Anschläge angeordnet werden. Alternativ dazu kann die Begrenzung der Aufwärtsbewegung der Generatorboje 2 über das abgewickelte Zugseil 4 erfolgen.

Das in den Fign. 1 bis 4 dargestellte Ausführungsbeispiel kann jedoch die Wellendrift nicht nutzen. Um die ordnungsgemäße Generatorfunktion auch bei Ebbe und Flut zu gewährleisten, müsste seine Linearführung sehr groß dimensioniert werden oder es müsste ein aufwändiger Verstellmechanismus für das Höhenniveau des unter Wasser liegenden Schwimmkörpers eingebaut werden.

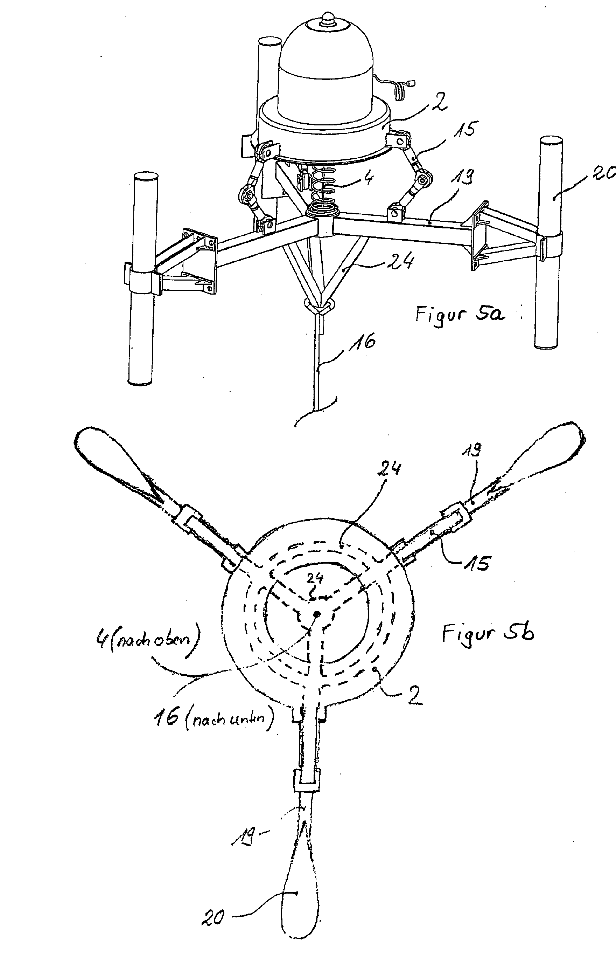

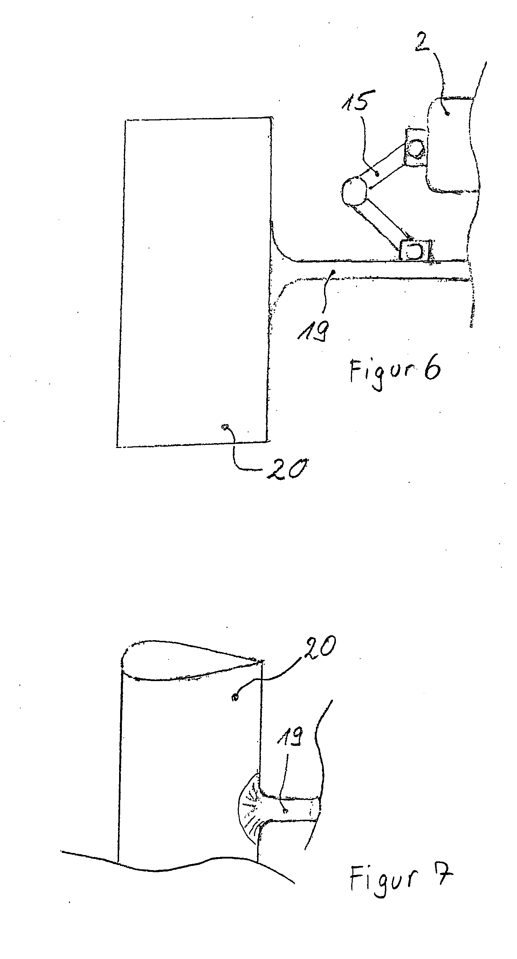

Die Fign. 5 bis 8 stellen ein weiteres Ausführungsbeispiel einer erfindugnsgemäßen Wellenenergiekonverteranordnung dar, mit welchem auch eine Wellendrift genutzt werden kann. Eine Wellenenergiekonverteranordnung deren Grundaufbau dem in den Fign. 1 bis 4 dargestellten Ausführungsbeispiel entspricht, ist dadurch gekennzeichnet, dass anstelle eines Schwimmkörpers 1 mindestens drei Schwimmkörper 20 an den Auslegern 19 einer Aufnahme 24 befestigt sind und die Generatorboje 2 sich dann von dieser Aufnahme mit der Wellenbewegung abdrücken kann und dabei das Zugseil 4 abgewickelt wird, um den Generator anzutreiben.

Die Schwimmkörper 20 können sich bei erfindungsgemäß fehlender oder längenvariabler Abspannung 16 zum Meeresgrund mit Ebbe und Flut bewegen. Dabei können die Schwimmkörper 20 so ausgebildet sein, dass sie einen geringen Strömungswiderstand besitzen, um die Wellenenergie für die Generatorboje 2 nicht zu absorbieren.

Um vergleichbar mit einem großen Schiff die Wellenempfindlichkeit zu senken und einen schwimmenden Fixpunkt gegenüber der Generatorboje 2 zu bilden, können die Schwimmkörper 20 so ausgebildet sein, dass ihre tiefer im Wasser liegenden Bereiche mit inneren oder äußeren Gewichten beschwert sind. Die Massenträgheit des Systems: Aufnahme 24, Ausleger 19 und Schwimmkörper 20 wird damit vergrößert.

Eine Ausnutzungssteigerung der Wellenenergie erhält man dadurch, dass die Schwimmkörper 20 so ausgebildet sind, dass sie die Wellen der Generatorboje 2 derart zuleiten, dass die kinetische Energie der Wellendrift in potentielle Energie einer erhöhten Wellenamplitude umgewandelt wird. Dieser Effekt kann mit horizontalen, an der Aufnahme 24 befestigten und unter Wasser liegenden Leitblechen verstärkt werden.

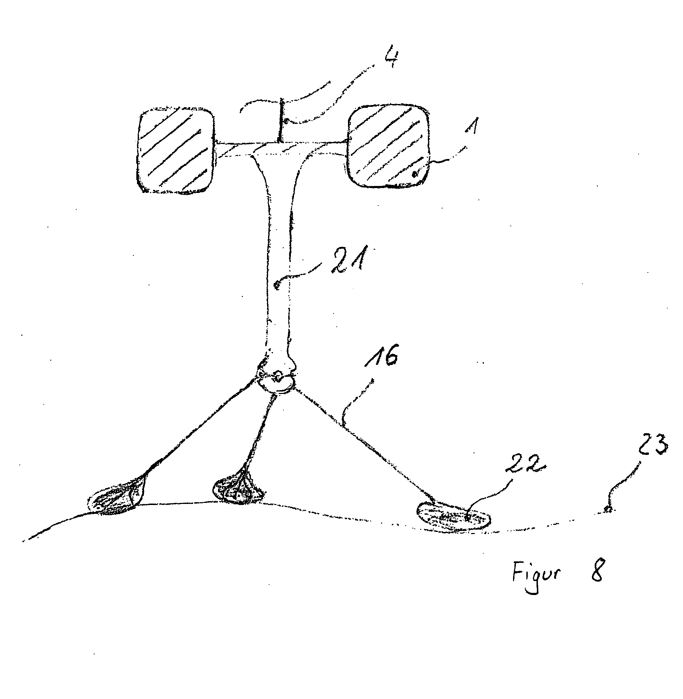

Eine weitere erfindungsgemäße Ausbildung (Figur 8) erhält die Wellenenergiekonverteranordnung, wenn ihre Abspannseile 16 des Schwimmkörpers 1 nicht direkt an diesem befestigt sind, sondern am unteren Ende eines am Schwimmkörper 1 befestigten Abspannungsstabes 21. Alternativ kann von dort aus nur ein Seil 16 zum Meeresgrund gespannt werden. Dieses Seil kann an einem Ende längenvariabel ausgebildet sein.

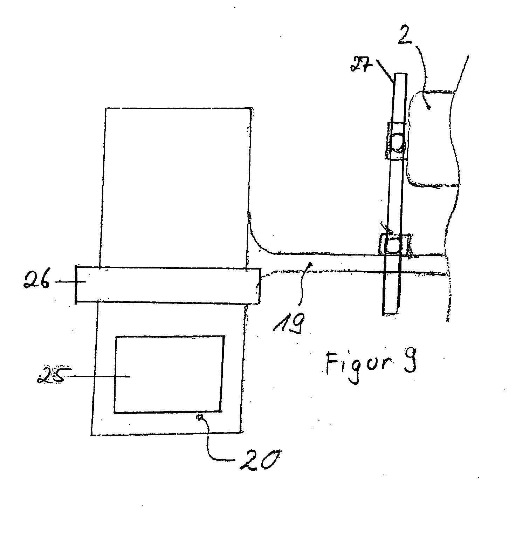

In Fig. 9 wird ein weiteres Ausführungsbeispiel dargestellt. Die Linearführung umfasst nun eine Zahnstange 27 statt der Schenkelpaare 15, die an einem Ende fest mit einem der Hauptbauteile verbunden ist und am anderen Ende mit ein Zahnrad in verbindung steht und über dieses bewegt werden kann. Außerdem ist am unteren Bereich des Schwimmkörpers, der der Generatorboje 2 abgewandt ist, ein Gewicht 25 angebracht zur Erhöhung der Massenträgheit. Weiter ist mittig am Schwimmkörper ein Leitblech 26 befestigt.

Im Folgenden werden weitere Aspekte genannte, die von der Erfindung umfasst werden. Ein Aspekt der Erfindung umfasst einen Wellenenergiekonverter, dadurch gekennzeichnet, dass er aus zwei Hauptbauteilen besteht: Einem Schwimmkörper 1, der unter Wasser liegt, durch seinen Auftrieb zur Meeresoberfläche strebt und in horizontaler Lage zum Meeresgrund abgespannt ist und einer Generatorboje 2, die auf dem Wasser schwimmt, mit dem Schwimkörper gelenkig und über ein aufrollbares Zugseil 4 verbunden ist und sich ihm gegenüber vertikal- linear mit den Wellen auf- und abwärts bewegt.

Ein weiterer Aspekt der Erfindung umfasst einen Wellenenergiekonverter nach dem ersten Aspekt, dadurch gekennzeichnet, dass der Schwimmkörper 1 und die Generatorboje 2 mit einer Feder 3, die die Gewichtsenergie der Generatorboje 2 aufnehmen kann, gekoppelt sind und beide Hauptbauteile über das Zugseil 4 miteinander in Wechselwirkung stehen.

Ein weiterer Aspekt der Erfindung umfasst einen Wellenenergiekonverter nach einem der vorhergehenden Aspekte, dadurch gekennzeichnet, dass die Generatorboje in Kraftflussrichtung folgende wesentlichen Bauteile enthält:
- Zugseil 4, das sich mit dem Wellengang auf einem Spulenkörper 5 auf- und abwickelt und dessen unteres Ende am Schwimmkörper 1 befestigt ist
- Spulenkörper 5, der das Zugseil 4 aufnimmt
- Pendelwelle 6, die sich mit dem Zugseil hin und her dreht
- Feder 7, deren eines Ende mit der Pendelwelle 6 und deren anderes Ende mit der Rahmenkonstruktion 8 der Generatorboje 2 fest verbunden ist, die der Vorspannung des Zugseiles 4 dient und die das abgewickelte Seil 4 wieder zurück zieht und damit den Aufwickelvorgang antreibt
- Freilauf 9, der die Pendelwelle 6 mit dem Getriebe verbindet und dafür sorgt, dass sich die angetriebenen Räder des Getriebes 10 immer nur in eine Richtung drehen
- Getriebe 10, zwischen Pendel- und Generatorwelle zur Drehzahlerhöhung
- Generatorwelle 11 mit Schwungrad 12
- Generator 13

Ein weiterer Aspekt der Erfindung umfasst einen Wellenenergiekonverter nach einem der vorhergehenden Aspekte, dadurch gekennzeichnet, dass die Anordnung des Freilaufes 9 nicht zwischen Pendelwelle 6 und Getriebe, sondern zwischen Generatorwelle 11 und Getriebe 10 oder innerhalb des Getriebes erfolgt.

Ein weiterer Aspekt der Erfindung umfasst einen Wellenenergiekonverter nach einem der vorhergehenden Aspekte, dadurch gekennzeichnet, dass anstelle eines Schwimmkörpers 1 mindestens drei Schwimmkörper 20 an den Auslegern 19 einer Aufnahme 24 befestigt sind und die Generatorboje 2 sich dann von dieser Aufnahme mit der Wellenbewegung abdrücken kann und dabei das Zugseil 4 abgewickelt wird, um den Generator anzutreiben.

Ein weiterer Aspekt der Erfindung umfasst einen Wellenenergiekonverter nach einem der vorhergehenden Aspekte, dadurch gekennzeichnet, dass die Schwimmkörper 20 so ausgebildet sind, dass sie einen geringen Strömungswiderstand besitzen.

Ein weiterer Aspekt der Erfindung umfasst einen Wellenenergiekonverter nach einem der vorhergehenden Aspekte, dadurch gekennzeichnet, dass die Schwimmkörper 20 so ausgebildet sind, dass ihre tiefer im Wasser liegenden Bereiche mit inneren oder äußeren Gewichten beschwert sind, um die Massenträgheit des Systems: Aufnahme 24, Ausleger 19 und Schwimmkörper 20 zu vergrößern.

Ein weiterer Aspekt der Erfindung umfasst einen Wellenenergiekonverter nach einem der vorhergehenden Aspekte, dadurch gekennzeichnet, dass die Schwimmkörper 20 so ausgebildet sind, dass sie die Wellen der Generatorboje 2 derart zuleiten, dass die kinetische Energie der Wellendrift in potentielle Energie einer erhöhten Wellenamplitude umgewandelt wird.

Ein weiterer Aspekt der Erfindung umfasst einen Wellenenergiekonverter nach dem vorhergehenden Aspekt, dadurch gekennzeichnet, dass dieser Effekt mit horizontalen, an der Aufnahme 24 befestigten und unter Wasser liegenden Leitblechen verstärkt wird.

Ein weiterer Aspekt der Erfindung umfasst einen Wellenenergiekonverter nach einem der vorhergehenden Aspekte, dadurch gekennzeichnet, dass die Abspannseile 16 des Schwimmkörpers 1 nicht direkt an diesem befestigt sind, sondern am unteren Ende eines Abspannungsstabes 21 oder dass alternativ von dort aus nur ein Seil 16 zum Meeresgrund gespannt wird.

### Bezugszeichenliste:

- 1.: Schwimmkörper, der zum Meeresboden hin abgespannt ist
- 2.: Generatorboje, die sich mit der Welle auf und ab bewegt
- 3.: Druckfeder, die die Gewichtsenergie aufnimmt
- 4.: Zugseil, das sich mit der Wellenbewegung auf- und abwickelt
- 5.: Spulenkörper, der das Zugseil 4 aufnimmt
- 6.: Pendelwelle, die sich mit der Zugseilbewegung hin und her dreht
- 7.: Feder, die das Zugseil 4 straff hält
- 8.: Rahmenkonstruktion der Generatorboje
- 9.: Freilauf
- 10.: Getriebe
- 11.: Generatorwelle
- 12.: Schwungrad
- 13.: Generator
- 14.: Dichtungen der Pendelwelle 6
- 15.: Linearführung der Generatorboje 2
- 16.: Abspannung des Schwimmkörpers 1 zum Meeresgrund
- 17.: Innenrohr zur wasserdichten Abgrenzung von Zugseil 4 und Spulenkörper 5 vom Innenraum der Generatorboje 2
- 18.: Stromanschluss
- 19.: Ausleger zur Befestigung der Schwimmkörper 20
- 20.: Schwimmkörper mit Strömungsprofil
- 21.: Abspannungsstab des Schwimmkörpers 1
- 22.: Gewicht
- 23.: Meeresgrund
- 24.: Aufnahme für Ausleger 19 und Schwimmkörper 20
- 25.: Gewicht
- 26.: Leitblech
- 27.: Zahnstange

## Patentansprüche

1. Wellenenergiekonverteranordnung, umfassend ein erstes Hauptbauteil und ein zweites Hauptbauteil sowie einen Generator (13) zum Umwandeln von einer potentiellen Energie in eine elektrische Energie, wobei das erste Hauptbauteil zum Liegen unterhalb einer Wasseroberfläche und zum Streben durch Auftrieb zu der Wasseroberfläche ausgebildet ist und an einem Meeresboden (23) befestigbar ist und das zweite Hauptbauteil zum Schwimmen auf der Wasseroberfläche ausgebildet sowie mit dem ersten Hauptbauteil über ein aufrollbares Zugseil (4) oder eine linear geführte Zahnstange verbunden ist, wobei das zweite Hauptbauteil gegenüber dem ersten Hauptbauteil vertikal-linear mit einem Wellengang auf-und abwärts bewegbar ist, **dadurch gekennzeichnet, dass** das erste Hauptbauteil und das zweite Hauptbauteil parallel zueinander geführt sind.

2. Wellenenergiekonverteranordnung nach Anspruch 1, **dadurch gekennzeichnet, dass** das erste Hauptbauteil mindestens einen Schwimmkörper (1) umfasst, der vorzugsweise in horizontaler Lage zum Meeresboden (23) abspannbar ist.

3. Wellenenergiekonverteranordnung nach Anspruch 1 oder Anspruch 2, **dadurch gekennzeichnet, dass** das zweite Hauptbauteil eine Generatorboje (2) umfasst.

4. Wellenenergiekonverteranordnung nach einem der vorhergehenden Ansprüche, **dadurch gekennzeichnet, dass** das erste Hauptbauteil und das zweite Hauptbauteil gelenkig verbunden sind, wobei vorzugsweise mindestens drei Schenkelpaare (15) gelenkig an dem ersten Hauptbauteil und an dem zweiten Hauptbauteil befestigt sind und jeweils ein Gelenk zwischen Schenkeln der Schenkelpaare (15) umfassen.

5. Wellenenergiekonverteranordnung nach einem der vorhergehenden Ansprüche, **dadurch gekennzeichnet, dass** das erste Hauptbauteil und das zweite Hauptbauteil mit einer ersten Feder (3), die eine Gewichtsenergie des zweiten Hauptbauteils aufnehmen kann, gekoppelt sind, wobei das erste Hauptbauteil und das zweite Hauptbauteil über das Zugseil (4) oder die linear geführte Zahnstange miteinander in Wechselwirkung stehen.

6. Wellenenergiekonverteranordnung nach einem der vorhergehenden Ansprüche, **dadurch gekennzeichnet, dass** das zweite Hauptbauteil in Kraftflussrichtung folgende wesentlichen Bauteile aufweist:
- das Zugseil (4), das sich mit dem Wellengang auf einem Spulenkörper (5) auf- und abwickelt und dessen unteres Ende am ersten Hauptbauteil befestigt ist;
- den Spulenkörper (5), der das Zugseil (4) aufnimmt;
- eine Pendelwelle (6), die sich mit dem Zugseil (4) hin- und herdreht;
- eine weitere Feder (7), deren eines Ende mit der Pendelwelle (6) und deren anderes Ende mit einer Rahmenkonstruktion (8) des zweiten Hauptbauteils verbunden ist, wobei die weitere Feder (7) zu einer Vorspannung des Zugseils (4) dient und das abgewickelte Zugseil (4) wieder zurück zieht und damit einen Aufwickelvorgang antreibt;
- einen Freilauf (9), der die Pendelwelle (6) mit einem Getriebe (10) verbindet und dafür sorgt, dass sich angetriebene Räder des Getriebes (10) immer nur in eine Richtung drehen;
- das Getriebe (10), welches zwischen der Pendelwelle (6) und einer Generatorwelle (11) zur Drehzahlerhöhung liegt;
- die Generatorwelle (11) mit einem Schwungrad (12)
- ein Generator (13).

7. Wellenenergiekonverteranordnung nach einem der vorhergehenden Ansprüche, **dadurch gekennzeichnet, dass** der Freilauf (9) zwischen der Generatorwelle (11) und dem Getriebe (10) oder innerhalb des Getriebes (10) angeordnet ist.

8. Wellenenergiekonverteranordnung nach einem der vorhergehenden Ansprüche, **dadurch gekennzeichnet, dass** das Zugseil (4) mittig durch einen Boden des zweiten Hauptbauteils geführt ist.

9. Wellenenergiekonverteranordnung nach einem der vorhergehenden Ansprüche, **dadurch gekennzeichnet, dass** das erste Hauptbauteil mindestens drei Schwimmkörper (20) umfasst, welche an mindestens einem Ausleger (19) einer Aufnahme (24) befestigt sind und das zweite Hauptbauteil mit dem Wellengang von der Aufnahme (24) abdrückbar ist, wobei das Zugseil (4) abgewickelt wird, um den Generator (13) anzutreiben.

10. Wellenenergiekonverteranordnung nach einem der vorhergehenden Ansprüche, **dadurch gekennzeichnet, dass** die mindestens drei Schwimmkörper (20) derart ausgebildet sind, dass sie einen geringen Strömungswiderstand aufweisen.

11. Wellenenergiekonverteranordnung nach einem der vorhergehenden Ansprüche, **dadurch gekennzeichnet, dass** zu einer Vergrößerung einer Massenträgheit eines die Aufnahme (24), den Ausleger (19) und den Schwimmkörper (20) umfassenden Systems tiefer unterhalb der Wasseroberfläche liegende Bereiche der mindestens drei Schwimmkörper (20) mit inneren und/oder äußeren Gewichten beschwert sind.

12. Wellenenergiekonverteranordnung nach einem der vorhergehenden Ansprüche, **dadurch gekennzeichnet, dass** die mindestens drei Schwimmkörper (20) derart ausgebildet sind, dass der Wellengang dem zweiten Hauptbauteil derart zugeleitet wird, dass eine kinetische Energie einer Wellendrift in eine potentielle Energie einer erhöhten Wellenamplitude umwandelbar ist.

13. Wellenenergiekonverteranordnung nach Anspruch 12, **dadurch gekennzeichnet, dass** eine Umwandlung der kinetischen Energie in die potentielle Energie durch horizontale, an der Aufnahme (24) befestigte und unterhalb der Wasseroberfläche liegende Leitbleche verstärkbar ist.

14. Wellenenergiekonverteranordnung nach einem der vorhergehenden Ansprüche, **dadurch gekennzeichnet, dass** das erste Hauptbauteil einen Abspannungsstab (21) sowie mindestens eine Abspannung (16), vorzugsweise ein Abspannseil, aufweist, wobei die Abspannung (16) mit einem Ende an einem unteren Ende des Abspannungsstabs (21) und mit einem weiteren Ende am Meeresboden (23) befestigt ist.

15. Wellenenergiekonverteranordnung nach einem der vorhergehenden Ansprüche, **dadurch gekennzeichnet, dass** eine Befestigung der Wellenenergiekonverteranordnung am Meeresboden (23) längenvariabel ist, um einen gezeitenunabhängigen Betrieb zu ermöglichen.
